# FASCICULE DE BREVET EUROPEEN

(11) **EP 2 635 469 B1**
(45) Date de publication et mention de la délivrance du brevet: **18.05.2016**
(21) Numéro de dépôt: 11779390.1
(22) Date de dépôt: 03.11.2011
(51) Int. Cl.: B60S 5/06

(54) **STATION D'ECHANGE DE BATTERIES AVEC UN DISPOSITIF DE PROTECTION**
STATION ZUM AUSTAUSCH VON BATTERIEN MIT EINER SCHUTZVORRICHTUNG
STATION FOR EXCHANGING BATTERIES WITH A PROTECTIVE DEVICE

(30) Priorité: 10.11.2010 FR 1059274
(43) Date de publication de la demande: 11.09.2013
(73) Titulaire: Renault S.A.S., 92100 Boulogne-Billancourt (FR)
(72) Inventeur: MULATO, Gilles, F-92320 Chatillon (FR)
(86) Numéro de dépôt international: PCT/EP2011/069281
(87) Numéro de publication internationale: WO 2012/059525

(56) Documents cités:
- GB-A- 2 195 594
- US-A- 3 726 293
- US-A- 5 612 606
- US-A1- 2009 198 372

## Description

L'invention concerne une station d'échange rapide de batteries de traction pour un véhicule, ladite station comprenant un dispositif de protection destiné à être interposé entre le véhicule et la station d'échange rapide de batteries de traction pour ledit véhicule, ladite station comportant une zone d'échange destinée à recevoir le véhicule et dans laquelle est agencée une première ouverture, sélectivement obturée par une trappe, qui est destinée à coïncider sensiblement avec une seconde ouverture correspondante d'un logement inférieur de réception d'une batterie de traction du véhicule, pour permettre le transfert de la batterie de traction déchargée du véhicule à la station et le transfert en sens inverse d'une nouvelle batterie de traction chargée de la station au véhicule.

Ce type de station d'échange rapide de batteries de traction pour véhicule est décrite dans le document US2008294283 A1.

L'augmentation croissante du nombre de véhicules automobiles électriques pose de nombreux problèmes en termes de ravitaillement.

Selon une première conception connue, il est connu de proposer des véhicules comportant un jeu de batteries intégré et fixe. Le rechargement d'un tel véhicule implique la liaison du véhicule à une source d'alimentation électrique et par conséquent son immobilisation.

Selon une seconde conception connue, il est connu de proposer des véhicules comportant un jeu de batteries amovible, qui peut, une fois déchargé, être échangé contre un nouveau jeu de batteries chargées dans une station dédiée à cet effet.

Les batteries associées à ce type d'opération sont généralement agencées dans un compartiment inférieur du véhicule, accessible par le dessous du véhicule.

Dans ce type de stations, le véhicule est préalablement amené en position sur un pont, un logement du véhicule étant agencé au dessus d'une trappe par laquelle le jeu de batteries déchargé peut être évacué puis par laquelle un nouveau jeu de batteries peut être inséré dans le logement.

Au cours de cette opération, il importe qu'aucun corps étranger ne pénètre ni dans le logement du véhicule, ni par la trappe de la station.

A cet effet, il est nécessaire de prévoir un moyen d'étanchéité aux corps étrangers qui soit interposé entre ces deux éléments.

Dans ce but, l'invention propose une station d'échange rapide de batteries de traction du type décrit précédemment, caractérisé en ce que ledit dispositif comporte au moins deux éléments escamotables longitudinaux et deux éléments escamotables transversaux qui sont mobiles entre une positon escamotée et une position déployée dans laquelle ils sont interposés entre un pourtour de la première ouverture et un pourtour de la seconde ouverture, pour éviter la pénétration de corps étrangers dans le logement inférieur de réception et/ou par la première ouverture de la station.

Selon d'autres caractéristiques de l'invention :
- les éléments escamotables longitudinaux comportent deux rideaux latéraux enroulables, logés dans un sol de la station de part et d'autre de guides latéraux du véhicule qui sont mobiles entre une position enroulée et une position déployée, inclinée vers le véhicule, dans laquelle un bord supérieur horizontal de chaque rideau accoste une partie inférieure d'une paroi sensiblement verticale de la carrosserie du véhicule,
- les éléments escamotables transversaux comportent deux volets pivotants transversaux, agencés sensiblement sous des extrémités avant et arrière du véhicule qui sont mobiles entre une position rabattue à l'horizontale et une position déployée dans laquelle un bord supérieur horizontal de chaque volet accoste une paroi horizontale inférieure de la carrosserie du véhicule,

- le bord supérieur horizontal de chaque élément comporte une protection, notamment un peigne souple,
- les éléments escamotables longitudinaux comportent deux boudins longitudinaux souples qui sont montés coulissants transversalement par rapport à un sol de la station entre une position écartée et une position rapprochée dans laquelle ils sont comprimés contre une partie inférieure d'une paroi sensiblement verticale de la carrosserie du véhicule,
- le dispositif comporte de chaque côté de la première ouverture, un chariot dont une partie, montée coulissante sous une rampe de guidage du véhicule associée, est mue par un vérin électrique porté par un châssis de la station, et dont une partie libre, faisant saillie entre la rampe et la première ouverture, porte le boudin,
- les éléments escamotables transversaux comportent deux rideaux transversaux coulissants, agencés sensiblement sous des extrémités avant et arrière du véhicule qui sont mobiles entre une position verticale basse et une position verticale haute dans laquelle un bord supérieur horizontal de chaque rideau accoste une paroi horizontale inférieure de la carrosserie du véhicule,
- le dispositif comporte au moins une jupe escamotable qui est logée dans un logement agencé sous le véhicule, dont un pourtour inférieur circonvient la première ouverture de la trappe, dont la périphérie est expansible verticalement et constitue les deux éléments escamotables longitudinaux et les deux éléments escamotables transversaux, et qui est mobile entre une position escamotée selon laquelle elle est comprimée dans le logement et une position déployée selon laquelle un pourtour supérieur de la jupe épouse sensiblement la seconde ouverture du logement,
- la périphérie expansible de la jupe est conformée en soufflet.

D'autres avantages de l'invention apparaîtront à la lecture de la description détaillée qui suit pour la compréhension de laquelle on se reportera aux dessins annexés dans lesquels :
- la figure 1A est une vue schématique en coupe longitudinale d'un dispositif de protection selon un premier mode de réalisation de l'invention représenté dans une position escamotée,
- la figure 1B est une vue axiale en bout schématique du dispositif de protection de la figure 1A représenté dans la position escamotée,
- la figure 2A est une vue schématique en coupe longitudinale du dispositif de protection de la figure 1A représenté dans une position déployée,
- la figure 2B est une vue axiale en bout schématique du dispositif de protection de la figure 1A représenté dans la position déployée,
- la figure 3 est une vue en perspective avec arrachement d'un dispositif de protection selon un second mode de réalisation de l'invention,
- la figure 4A est une vue schématique en coupe longitudinale du dispositif de protection selon la figure 3 représenté dans une position escamotée,
- la figure 4B est une vue axiale en bout schématique du dispositif de protection de la figure 3 représenté dans la position escamotée,
- la figure 5A est une vue schématique en coupe longitudinale du dispositif de protection de la figure 3 représenté dans une position déployée,
- la figure 5B est une vue axiale en bout schématique du dispositif de protection de la figure 3 représenté dans la position déployée,
- la figure 6A est une vue schématique en coupe longitudinale d'un dispositif de protection selon un troisième mode réalisation de l'invention représenté dans une position escamotée,
- la figure 6B est une vue schématique en coupe longitudinale du dispositif de protection de la figure 6A l'invention représenté dans une position déployée
- la figure 7 est une vue en perspective du dispositif de protection de la figure 6A.

On utilisera à titre non limitatif les orientations longitudinale, verticale et transversale selon le trièdre L, V, T représenté aux figures.

On adoptera aussi le terme horizontal, en référence à la gravité terrestre, et les termes supérieur et inférieur en référence à la direction verticale du repère L, V, T.

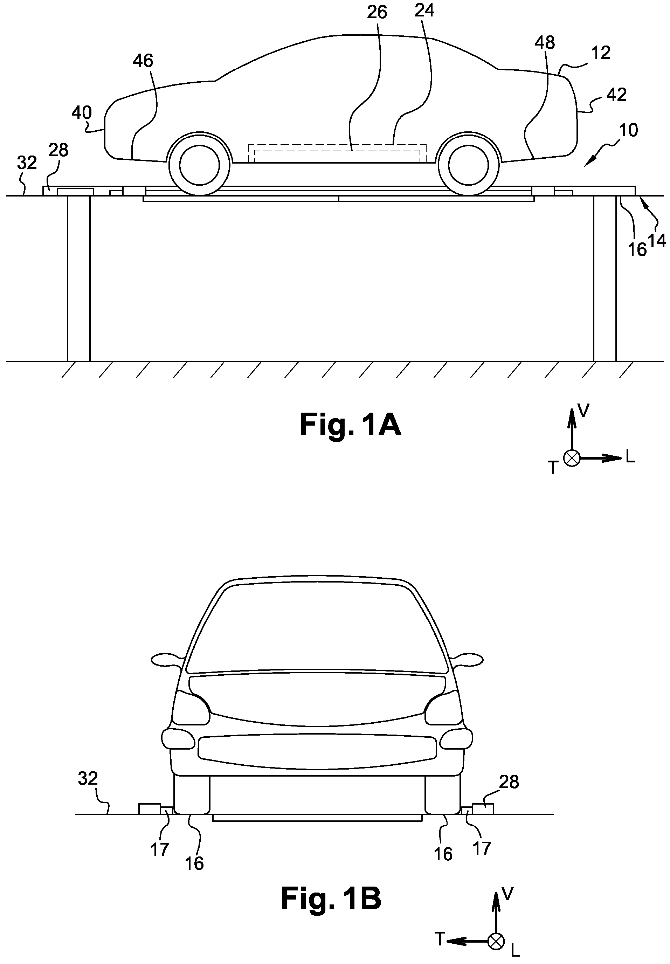

On a représenté sur les figures 1A à 6B un dispositif 10 de protection destiné à être interposé entre un véhicule automobile 12 électrique et une station 14 d'échange rapide de batteries de traction pour ledit véhicule 12.

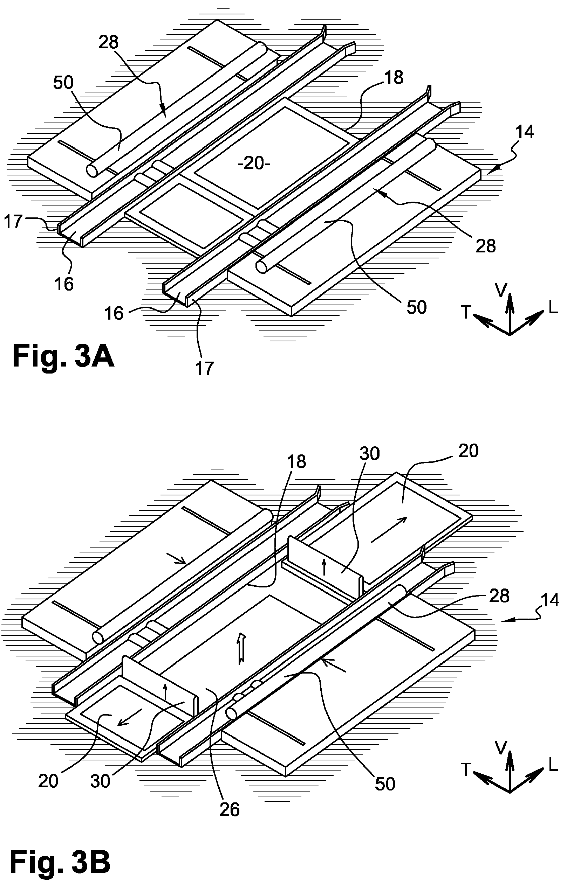

De manière connue, comme l'illustrent les figures 3A et 3B, ladite station 14 comporte une zone d'échange délimitée par exemple par au moins deux rampes parallèles 16, de part et d'autre desquelles sont agencés des guides 17, qui sont destinées à recevoir en roulage le véhicule 12 et entre lesquelles est agencée une première ouverture 18, sélectivement obturée par au moins une trappe 20, qui est destinée à coïncider sensiblement avec une seconde ouverture correspondante (non représentée) d'un logement inférieur 24 de réception d'une batterie 26 de traction du véhicule 12, pour permettre le transfert de la batterie 26 de traction déchargée du véhicule 12 à la station 14, et réciproquement le transfert en sens inverse d'une nouvelle batterie de traction 26 chargée de la station 14 au véhicule 12.

Il est à noter que d'autres moyens de guidage du véhicule que les rampes 16 sont utilisables pour faire coïncider sensiblement la première ouverture avec la seconde ouverture par exemple des moyens de guidage d'un conducteur du véhicule par commande vocale, la station comportant des moyens de localisation très précis du véhicule, tels que ceux décrits dans la demande US 2008/0294283.

Conformément à l'invention, le dispositif 10 comporte au moins deux éléments escamotables 28 longitudinaux et deux éléments escamotables transversaux 30 qui sont mobiles entre une positon escamotée, représentée aux figures 1A, 2A et 6A, et une position déployée, représentée aux figures 1B, 2B et 6B dans laquelle ils sont interposés entre un pourtour de la première ouverture 18 et un pourtour de la seconde ouverture, pour éviter la pénétration de corps étrangers dans le logement inférieur de réception 24 et/ou dans la station 14.

Selon des premier et deuxième modes de réalisation qui ont été représentés aux figures 1A à 5B, le dispositif 10 est porté par la station d'échange 14.

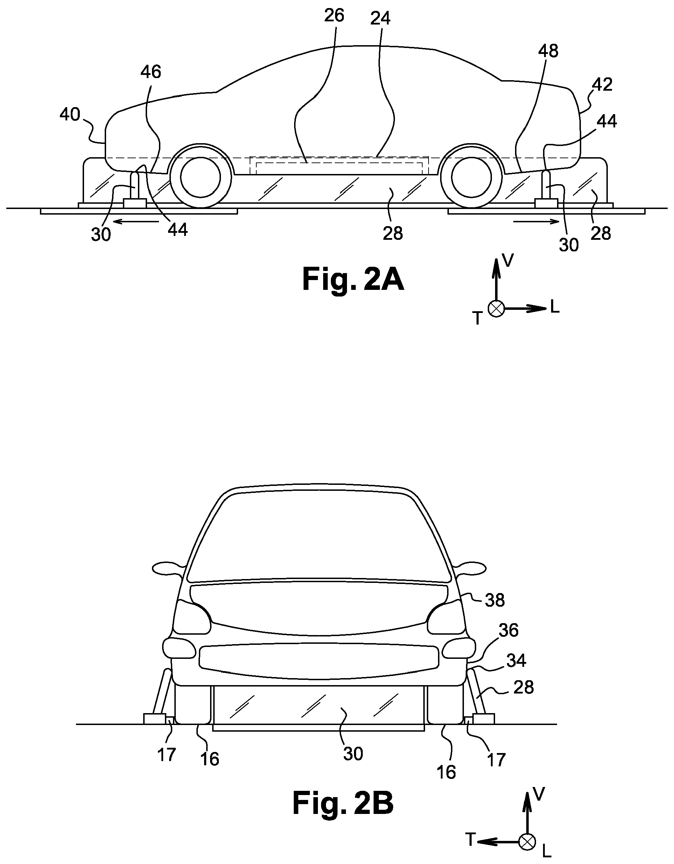

Ainsi, comme l'illustrent les figures 1B et 2B, les éléments escamotables longitudinaux comportent deux rideaux latéraux 28 enroulables, logés dans un sol 32 de la station 14 de part et d'autre des guides latéraux 17 du véhicule. Ces rideaux latéraux 28 sont mobiles entre une position enroulée, qui a été représentée à la figure 1B et une position déployée, inclinée vers le véhicule, qui a été représentée à la figure 2B dans laquelle un bord supérieur horizontal 34 de chaque rideau 28 accoste une partie inférieure 36 d'une paroi 38 sensiblement verticale de la carrosserie du véhicule 12.

Par ailleurs, les éléments escamotables transversaux 30 comportent deux volets 30 pivotants transversaux, agencés sensiblement sous des extrémités avant 40 et arrière 42 du véhicule 12 qui sont mobiles entre une position rabattue à l'horizontale, représentée à la figure 1A, et une position déployée, représentée à la figure 2A, dans laquelle un bord supérieur 44 horizontal de chaque volet 30 accoste une paroi horizontale inférieure respective 46, 48 de la carrosserie du véhicule 10.

De préférence, le bord supérieur horizontal 44 de chaque élément comporte une protection, notamment un peigne souple (non représenté).

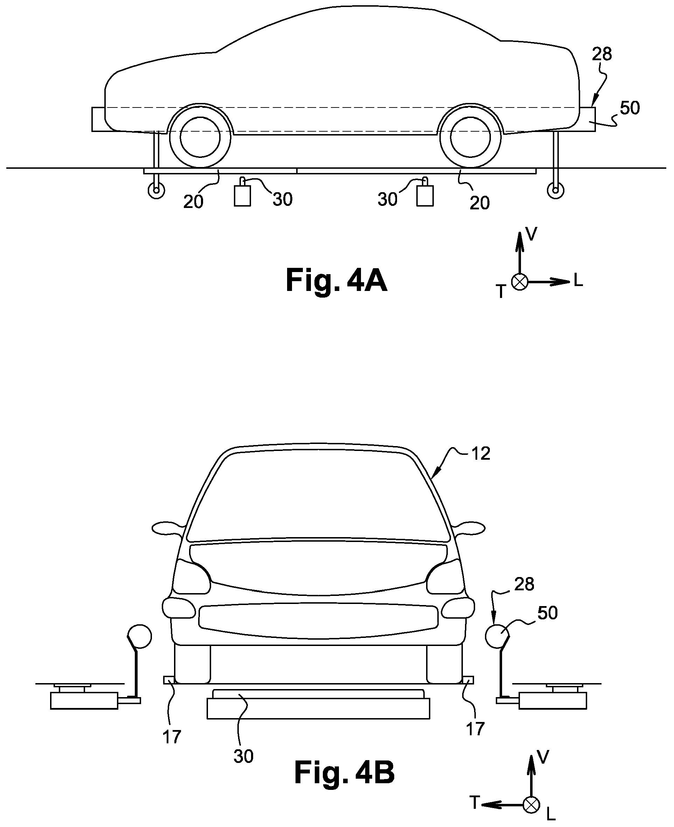

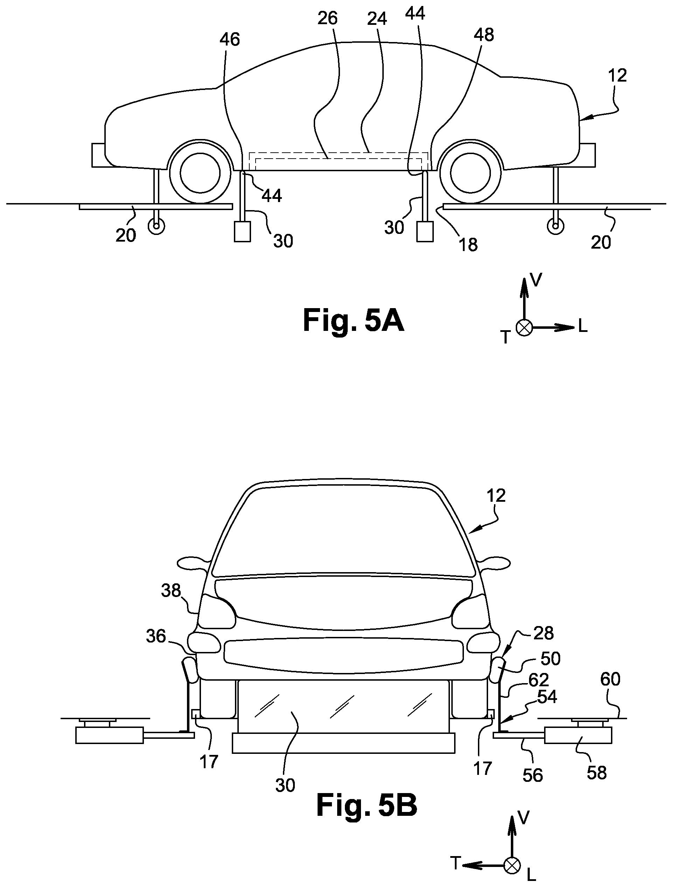

Selon un deuxième mode de réalisation qui a été représenté aux figures 3, 4B et 5B, les éléments escamotables longitudinaux 28 comportent deux boudins longitudinaux 50 souples qui sont montés coulissants transversalement par rapport à un sol 32 de la station 14 entre une position écartée, représentée à la figure 4B et une position rapprochée, représentée à la figure 5B, dans laquelle ils sont comprimés contre une partie inférieure 36 d'une paroi 38 sensiblement verticale de la carrosserie du véhicule 12.

Pour permettre le mouvement des boudins longitudinaux 50 les éléments escamotables longitudinaux 28 comportent de chaque côté de la première ouverture 18, un chariot 54 dont une partie 56, montée coulissante sous la rampe 16 associée, est mue par un vérin électrique 58 porté par un châssis 60 de la station 14, et dont une partie libre 62, faisant saillie entre la rampe 16 et la première ouverture 18, porte le boudin 50.

Dans ce deuxième mode de réalisation de l'invention, les éléments escamotables transversaux 30 comportent deux rideaux transversaux coulissants 30, agencés sensiblement sous des extrémités avant et arrière du véhicule qui sont mobiles entre une position verticale basse, représentée à la figure 4A et une position verticale haute, représentée à la figure 5A dans laquelle un bord supérieur horizontal 44 de chaque rideau 30 accoste une paroi horizontale inférieure respective 46, 48 de la carrosserie du véhicule 12.

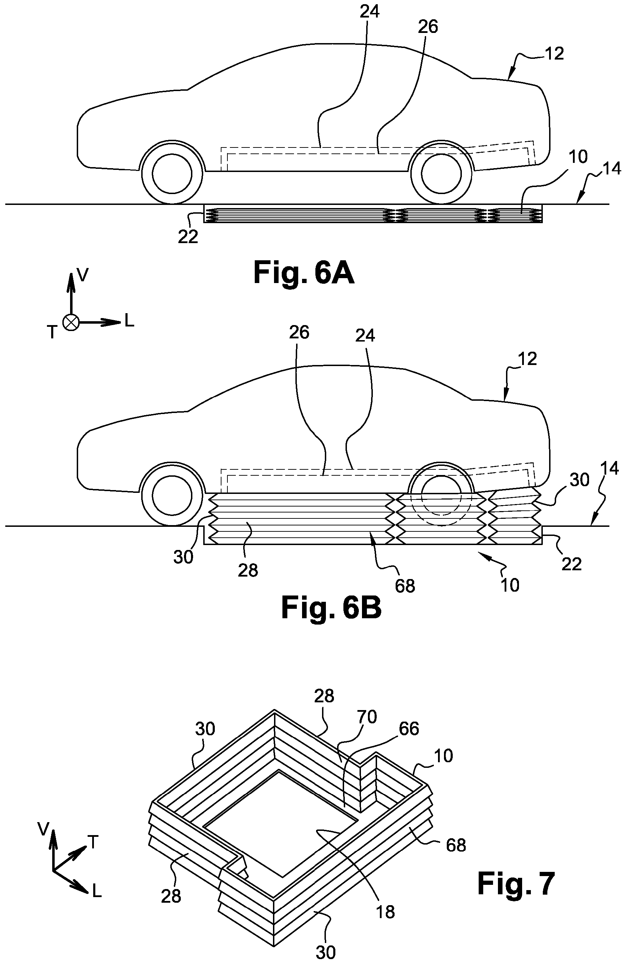

Enfin, selon un troisième mode de réalisation de l'invention qui a été représenté aux figures 6A à 7, le dispositif 10 est constitué pour l'essentiel d'une jupe escamotable 10 qui est logée dans un logement 22 de la station 14 agencé sous le véhicule 12.

Comme l'illustre la figure 7, un pourtour 66 inférieur de la jupe 10 est destiné à circonvenir la première ouverture 18 de la trappe 20.

Une périphérie 68 de la jupe 10 est expansible verticalement et constitue les deux éléments escamotables longitudinaux 28 et les deux éléments 30 escamotables transversaux. Cette périphérie 68 est mobile entre une position escamotée, représentée à la figure 6A selon laquelle elle est comprimée dans le logement 22 pour permettre le roulage et la mise en position du véhicule et une position déployée, représentée à la figure 6B, selon laquelle un pourtour supérieur 70 de la jupe 10 épouse sensiblement la seconde ouverture 22.

Avantageusement, la périphérie expansible 68 de la jupe 10 est conformée en soufflet. Cette configuration n'est pas limitative de l'invention et il sera compris que toute jupe expansible 10, pourrait convenir à la bonne mise en oeuvre de l'invention. Ainsi, une jupe 10 dont la périphérie 68 serait gonflable pourrait elle aussi convenir à la bonne mise en oeuvre de l'invention.

L'invention permet donc d'assurer le renouvellement d'un jeu de batteries d'un véhicule automobile électrique dans uns station dite de "quick drop" en prévenant tout risque d'intrusion de corps étranger dans la station ou dans le véhicule.

## Revendications

1. Station d'échange (14) rapide de batterie (26) de traction pour véhicule (12) automobile électrique comportant un dispositif (10) de protection destiné à être interposé entre ledit véhicule (12) et ladite station (14), ladite station (14) comportant une zone d'échange destinée à recevoir le véhicule (12) et dans laquelle est agencée une première ouverture (18), sélectivement obturée par une trappe (20), qui est destinée à coïncider sensiblement avec une seconde ouverture (22) correspondante d'un logement (24) inférieur de réception d'une batterie (26) de traction du véhicule (12), pour permettre le transfert de la batterie (26) de traction déchargée du véhicule (12) à la station (14) et le transfert en sens inverse d'une nouvelle batterie (26) de traction chargée de la station (14) au véhicule (12),
**caractérisé en ce que** le dispositif comporte au moins deux éléments escamotables longitudinaux (28) et deux éléments escamotables transversaux (30) qui sont mobiles entre une positon escamotée et une position déployée dans laquelle lesdits éléments escamotables longitudinaux et transversaux sont interposés entre un pourtour de la première ouverture (18) et un pourtour de la seconde ouverture (22), pour éviter la pénétration de corps étrangers dans le logement inférieur de réception (24) et/ou par la première ouverture de la station (14).

2. Station d'échange (14) selon la revendication précédente, **caractérisée en ce que** les éléments escamotables longitudinaux comportent deux rideaux (28) latéraux enroulables, logés dans un sol (32) de la station (14) de part et d'autre de guides (17) latéraux du véhicule (12), qui sont mobiles entre une position enroulée et une position déployée, inclinée vers le véhicule (12), dans laquelle un bord supérieur (34) horizontal de chaque rideau (28) accoste une partie inférieure (36) d'une paroi (38) sensiblement verticale de la carrosserie du véhicule (12).

3. Station d'échange (14) selon l'une des revendications précédentes, **caractérisée en ce que** les éléments escamotables transversaux (30) comportent deux volets pivotants transversaux, agencés sensiblement sous des extrémités avant (40) et arrière (42) du véhicule (12) qui sont mobiles entre une position rabattue à l'horizontale et une position déployée dans laquelle un bord supérieur horizontal (44) de chaque volet (30) accoste une paroi horizontale inférieure (46, 48) de la carrosserie du véhicule (12).

4. Station d'échange (14) selon la revendication précédente, **caractérisée en ce que** le bord supérieur (44) horizontal de chaque élément (28, 30) comporte une protection, notamment un peigne souple.

5. Station d'échange (14) selon la revendication 1, **caractérisée en ce que** les éléments (28) escamotables longitudinaux comportent deux boudins (50) longitudinaux souples qui sont montés coulissants transversalement par rapport à un sol (32) de la station (14) entre une position écartée et une position rapprochée dans laquelle ils sont comprimés contre une partie inférieure (36) d'une paroi (38) sensiblement verticale de la carrosserie du véhicule (12).

6. Station d'échange (14) selon la revendication précédente, **caractérisée en ce qu'**il comporte de chaque côté de la première ouverture (18), un chariot (54) dont une partie (56), montée coulissante sous une rampe (17) de guidage du véhicule associée, est mue par un vérin électrique (58) porté par un châssis (60) de la station (14), et dont une partie libre (62), faisant saillie entre la rampe (16) et la première ouverture (18), porte le boudin (50).

7. Station d'échange (14) selon l'une des revendications 1 ou 5, **caractérisée en ce que** les éléments escamotables transversaux (30) comportent deux rideaux transversaux coulissants, agencés sensiblement sous des extrémités avant et arrière du véhicule qui sont mobiles entre une position verticale basse et une position verticale haute dans laquelle un bord supérieur horizontal (44) de chaque rideau (30) accoste une paroi horizontale inférieure (46, 48) de la carrosserie du véhicule (12).

8. Station d'échange (14) selon la revendication 1, **caractérisée en ce qu'**il comporte au moins une jupe escamotable (10) qui est logée dans un logement (22) agencé sous le véhicule (12), dont un pourtour inférieur (66) circonvient la première ouverture (18) de la trappe (20), dont la périphérie (68) est expansible verticalement et constitue les deux éléments escamotables longitudinaux (28) et les deux éléments escamotables transversaux (30), et qui est mobile entre une position escamotée selon laquelle elle est comprimée dans le logement (22) et une position déployée selon laquelle un pourtour supérieur (70) de la jupe (10) épouse sensiblement la seconde ouverture du logement (24)

9. Station d'échange (14) selon la revendication précédente, caractérisée en ce la périphérie expansible (68) de la jupe (10) est conformée en soufflet.

## Patentansprüche

1. Schnellwechselstation (14) einer Traktionsbatterie (26) für ein elektrisches Kraftfahrzeug (12), die eine Schutzvorrichtung (10) aufweist, welche dazu bestimmt ist, zwischen das Fahrzeug (12) und die Station (14) eingefügt zu werden, wobei die Station (14) eine Wechselzone aufweist, die dazu bestimmt ist, das Fahrzeug (12) aufzunehmen, und in der eine selektiv von einer Klappe (20) verschlossene erste Öffnung (18) ausgespart ist, die dazu bestimmt ist, im Wesentlichen mit einer entsprechenden zweiten Öffnung (22) einer unteren Aufnahme (24) für den Empfang einer Traktionsbatterie (26) des Fahrzeugs (12) übereinzustimmen, um den Transfer der entladenen Traktionsbatterie (26) vom Fahrzeug (12) zur Station (14) und den Transfer in Gegenrichtung einer neuen geladenen Traktionsbatterie (26) von der Station (14) zum Fahrzeug (12) zu ermöglichen, **dadurch gekennzeichnet, dass** die Vorrichtung mindestens zwei einziehbare Längselemente (28) und zwei einziehbare Querelemente (30) aufweist, die zwischen einer eingezogenen Stellung und einer ausgezogenen Stellung beweglich sind, in der die einziehbaren Längs- und Querelemente zwischen einen Umfang der ersten Öffnung (18) und einen Umfang der zweiten Öffnung (22) eingefügt sind, um das Eindringen von Fremdkörpern in die untere Empfangsaufnahme (24) und/oder durch die erste Öffnung der Station (14) zu verhindern.

2. Wechselstation (14) nach dem vorhergehenden Anspruch, **dadurch gekennzeichnet, dass** die einziehbaren Längselemente zwei seitliche Rollvorhänge (28) aufweisen, die in einem Boden (32) der Station (14) zu beiden Seiten von seitlichen Führungen (17) des Fahrzeugs (12) untergebracht sind, die zwischen einer aufgewickelten und einer zum Fahrzeug (12) geneigten abgewickelten Stellung beweglich sind, in der ein oberer waagrechter Rand (34) jedes Vorhangs (28) sich an einen unteren Teil (36) einer im Wesentlichen senkrechten Wand (38) der Karosserie des Fahrzeugs (12) anlegt.

3. Wechselstation (14) nach einem der vorhergehenden Ansprüche, **dadurch gekennzeichnet, dass** die einziehbaren Querelemente (30) zwei im Wesentlichen unter vorderen (40) und hinteren (42) Enden des Fahrzeugs (12) angeordnete Querschwingleisten aufweisen, die zwischen einer waagrecht heruntergeklappten Stellung und einer ausgezogenen Stellung beweglich sind, in der ein waagrechter oberer Rand (44) jeder Leiste (30) sich an eine untere waagrechte Wand (46, 48) der Karosserie des Fahrzeugs (12) anlegt.

4. Wechselstation (14) nach dem vorhergehenden Anspruch, **dadurch gekennzeichnet, dass** der waagrechte obere Rand (44) jedes Elements (28, 30) einen Schutz, insbesondere einen elastischen Kamm, aufweist.

5. Wechselstation (14) nach Anspruch 1, **dadurch gekennzeichnet, dass** die einziehbaren Längselemente (28) zwei elastische Längswülste (50) aufweisen, die bezüglich eines Bodens (32) der Station (14) zwischen einer entfernten und einer angenäherten Stellung quer gleitend montiert sind, in der sie gegen einen unteren Teil (36) einer im Wesentlichen senkrechten Wand (38) der Karosserie des Fahrzeugs (12) komprimiert werden.

6. Wechselstation (14) nach dem vorhergehenden Anspruch, **dadurch gekennzeichnet, dass** sie auf jeder Seite der ersten Öffnung (18) einen Laufwagen (54) aufweist, von dem ein Teil (56), der gleitend unter eine zugeordnete Führungsrampe (17) des Fahrzeugs montiert ist, von einem Elektrozylinder (58) bewegt wird, der von einem Fahrgestell (60) der Station (14) getragen wird, und von dem ein freier Teil (62), der zwischen der Rampe (16) und der ersten Öffnung (18) vorsteht, den Wulst (50) trägt.

7. Wechselstation (14) nach einem der Ansprüche 1 oder 5, **dadurch gekennzeichnet, dass** die einziehbaren Querelemente (30) zwei im Wesentlichen unter vorderen und hinteren Enden des Fahrzeugs angeordnete gleitende Quervorhänge aufweisen, die zwischen einer unteren senkrechten Stellung und einer oberen senkrechten Stellung beweglich sind, in der ein waagrechter oberer Rand (44) jedes Vorhangs (30) sich an eine waagrechte untere Wand (46, 48) der Karosserie des Fahrzeugs (12) anlegt.

8. Wechselstation (14) nach Anspruch 1, **dadurch gekennzeichnet, dass** sie mindestens eine einziehbare Schürze (10) aufweist, die in einer unter dem Fahrzeug (12) angeordneten Aufnahme (22) untergebracht ist, von der eine untere Umrandung (66) die erste Öffnung (18) der Klappe (20) umgibt, deren Umfang (68) senkrecht dehnbar ist und die zwei einziehbaren Längselemente (28) und die zwei einziehbaren Querelemente (30) bildet, und die zwischen einer eingezogenen Stellung, gemäß der sie in der Aufnahme (22) komprimiert ist, und einer ausgezogenen Stellung beweglich ist, gemäß der eine obere Umrandung (70) der Schürze (10) sich im Wesentlichen an die zweite Öffnung der Aufnahme (24) anpasst.

9. Wechselstation (14) nach dem vorhergehenden Anspruch, **dadurch gekennzeichnet, dass** der dehnbare Umfang (68) der Schürze (10) als Faltenbalg ausgebildet ist.

## Claims

1. Station (14) for rapidly exchanging drive batteries (26) for an electric motor vehicle (12) comprising a protective device (10) to be positioned between said vehicle (12) and said station (14), said station (14) comprising an exchange area for receiving the vehicle (12) and in which a first opening (18) is arranged, said opening being selectively closed by a hatch (20) and intended to substantially coincide with a corresponding second opening (22) of a lower receptacle (24) for receiving a drive battery (26) of the vehicle (12) so as to enable the transfer of the dead drive battery (26) from the vehicle (12) to the station (14) and so as to enable the transfer in the opposite direction of a new charged drive battery (26) from the station (14) to the vehicle (12),
**characterized in that** the device comprises at least two longitudinal retractable elements (28) and two transverse retractable elements (30), which are movable between a retracted position and a deployed position, in which said longitudinal and transverse retractable elements are arranged between a perimeter of the first opening (18) and a perimeter of the second opening (22) so as to avoid the penetration of foreign bodies into the lower receiving receptacle (24) and/or through the first opening of the station (14).

2. Exchange station (14) according to the preceding claim, **characterized in that** the longitudinal retractable elements comprise two windable lateral shutters (28), which are housed in a floor (32) of the station (14) on either side of lateral guides (17) for the vehicle (12) and which are movable between a wound position and a deployed position, inclined towards the vehicle (12), in which a horizontal upper edge (34) of each shutter (28) is arranged alongside a lower part (36) of a substantially vertical wall (38) of the body of the vehicle (12).

3. Exchange station (14) according to either of the preceding claims, **characterized in that** the transverse retractable elements (30) comprise two transverse pivoting sections, which are housed substantially below the front (40) and rear (42) ends of the vehicle (12) and which are movable between a horizontal folded-back position and a deployed position, in which a horizontal upper edge (44) of each section (30) is arranged alongside a lower horizontal wall (46, 48) of the body of the vehicle (12).

4. Exchange station (14) according to the preceding claim, **characterized in that** the horizontal upper edge (44) of each element (28, 30) comprises a protective means, in particular a flexible comb.

5. Exchange station (14) according to Claim 1, **characterized in that** the longitudinal retractable elements (28) comprise two flexible longitudinal tubular pads (50), which are mounted so as to slide transversely with respect to a floor (32) of the station (14) between a spaced position and a close position, in which they are compressed against a lower part (36) of a substantially vertical wall (38) of the body of the vehicle (12).

6. Exchange station (14) according to the preceding claim, **characterized in that**, on each side of the first opening (18), it comprises a trolley (54) of which a part (56) mounted slidingly below a ramp (17) for guiding the associated vehicle is moved by an electric actuator (58) carried by a frame (60) of the station (14), and of which a free part (62) projecting between the ramp (16) and the first opening (18) carries the tubular pad (50).

7. Exchange station (14) according to either of Claims 1 and 5, **characterized in that** the transverse retractable elements (30) comprise two sliding transverse shutters, which are housed substantially below the front and rear ends of the vehicle and which are movable between a low vertical position and a high vertical position, in which a horizontal upper edge (44) of each shutter (30) is arranged alongside a lower horizontal wall (46, 48) of the body of the vehicle (12).

8. Exchange station (14) according to Claim 1, **characterized in that** it comprises at least one retractable skirt (10), which is housed in a receptacle (22) arranged below the vehicle (12) and of which a lower perimeter (66) runs around the first opening (18) of the hatch (20), and of which the periphery (68) is vertically expandable and constitutes the two longitudinal retractable elements (28) and the two transverse retractable elements (30), and which is movable between a retracted position, in which it is compressed in the receptacle (22), and a deployed position, in which an upper perimeter (70) of the skirt (10) substantially matches the second opening of the receptacle (24).

9. Exchange station (14) according to the preceding claim, **characterized in that** the expandable periphery (68) of the skirt (10) is shaped in the manner of a bellows.
